# EUROPÄISCHE PATENTSCHRIFT

(11) **EP 2 679 560 B1**
(45) Veröffentlichungstag und Bekanntmachung des Hinweises auf die Patenterteilung: **09.06.2021**
(21) Anmeldenummer: 13173658.9
(22) Anmeldetag: 25.06.2013
(51) Int. Cl.: C04B 28/02, C04B 28/04, C04B 28/06, C04B 28/08, C04B 28/10, C04B 28/14, C04B 28/22, C04B 40/00, C04B 40/06, C04B 111/60, C04B 111/62, C04B 111/80

(54) **Zweikomponenten-Bodenspachtel**
Two-component floor spatula
Spatule de sol de deux composants

(30) Priorität: 29.06.2012 DE 102012012932
(43) Veröffentlichungstag der Anmeldung: 01.01.2014
(73) Patentinhaber: Brillux GmbH & Co. KG, 48163 Münster (DE)
(72) Erfinder: Kugel, Manfred, 48653 Coesfeld (DE); Höwische, Thorsten, 48153 Münster (DE); Loerke, Steffen, 48153 Münster (DE)
(74) Vertreter: Cohausz & Florack

(56) Entgegenhaltungen:
- EP-A1- 1 500 635
- EP-A2- 0 383 492
- EP-A2- 1 081 110
- EP-A2- 1 614 670
- WO-A1-2009/132967
- WO-A1-2012/035456
- WO-A2-2006/125501
- WO-A2-2010/149737
- CN-A- 101 423 358
- CN-A- 102 173 667
- DE-A1- 10 159 340
- DE-A1- 10 352 613
- DE-C2- 19 812 246
- FR-A1- 2 488 874
- IT-A1- MI20 100 411
- US-A1- 2007 129 522
- US-A1- 2008 178 769

## Beschreibung

Die Erfindung betrifft eine pastöse Bodenspachtelmasse sowie ein Kit-of-parts zur Herstellung eines gebrauchsfertigen Bodenspachtels. Des Weiteren betrifft die Erfindung die Verwendung eines solchen Kit-of-parts zur Herstellung eines gebrauchsfertigen Bodenspachtels. Die Erfindung betrifft schließlich ein Verfahren zur Herstellung eines gebrauchsfertigen Bodenspachtels.

Bodenspachtel sind in unterschiedlichen Zusammensetzungen bekannt. Im Allgemeinen bestehen derartige Bodenspachtel aus hydraulischen und/oder nicht hydraulischen Bindemitteln, mineralischen Zuschlägen und sogenannten Additiven, wie beispielsweise Netzmittel, Entschäumer, Veflüssigern, Verzögerern oder Beschleunigern.

Im Gegensatz zu Wand- und Deckenspachteln, welche auch als gebrauchsfertige Spachtelmassen angeboten werden, müssen Bodenspachtelmassen wegen der höheren mechanischen Schlag- und Stoßbeanspruchung besondere Erfordernisse vor allem in Bezug auf ihre Härte erfüllen.

Vorherrschend auf dem Gebiet der Bodenspachtelprodukte sind pulverförmige Bodenspachteltrockenmischungen auf Zement- oder Calciumsulfatbasis. Sie müssen unmittelbar vor Gebrauch auf der Baustelle mit Wasser angerührt werden, um einen gebrauchsfertigen Bodenspachtel zu erhalten.

Dies bringt mehrere Nachteile mit sich. Zum Einen besteht das Erfordernis, große Mengen an Wasser zum Anmischen der Bodenspachtelmasse auf der Baustelle bereitstellen zu müssen. Außerdem geht das Vermischen großer Mengen pulverförmiger Spachtelmasse mit Wasser auf der Baustelle mit einer nicht unerheblichen Staubentwicklung einher. Diese verursacht nicht nur eine großflächige Verschmutzung, welche mit Zeitaufwand wieder bereinigt werden muss, sondern stellt auch ein Gesundheitsrisiko für die Beschäftigten dar.

Ein weiterer Nachteil der derzeit gebräuchlichen Bodenspachtel ist die Tatsache, dass nach Anmischen der Bodenspachtelmasse diese zügig auf den Boden ausgebracht werden muss, da der Aushärtvorgang unmittelbar bei Kontakt der zementösen Bodenspachtelmasse mit dem Anmachwasser beginnt. Für optimale Eigenschaften des ausgehärteten Bodenspachtels ist jedoch eine gleichmäßige Mischung und möglichst feine Dispersion erforderlich. Dies nimmt in der Praxis einige Zeit in Anspruch, da verhältnismäßig viel Pulver mit Wasser zu einer homogenen Masse aufgeschlossen werden muss. Oftmals muss ein Kompromiss zwischen optimaler Vermischung und Schnelligkeit beim Anmischen zur Vermeidung eines frühzeitigen Aushärtens der Spachtelmasse gefunden werden.

In jüngerer Zeit werden vermehrt Bodenspachtel direkt als Bodenbelag benutzt und nicht nur als Untergrund für einen weiteren Bodenbelag wie beispielsweise PVC, Teppichboden, Laminat oder Parkett. Da der Bodenspachtel somit heute oftmals den obersten und damit sichtbaren Bodenbelag bildet, werden erhöhte Anforderungen an den Oberflächencharakter und dekorative optische Eigenschaften wie Struktur und Farbe des Bodenspachtels gestellt.

Bei den heute üblichen Verfahren zur Herstellung von dekorativen Bodenspachteln wird während des Anmischvorgangs Farbtonkonzentrat und/oder dekorative stückige Zusätze wie Sand, Metallchips, Fasern oder ähnliches dem Bodenspachtel beigemischt.

Dies hat zum einen den Nachteil, dass wegen des Zeitdrucks, welcher durch den Beginn der Aushärtung des Bodenspachtels während des Anmischvorgangs entsteht, ein genaues und reproduzierbares Abwiegen und Zumischen der kreativen Zusätze wie Farbtonkonzentrat oder Metallchips erschwert wird.

Zum anderen haben die heutzutage angewandten Produkte und Verfahren aber auch den Nachteil, dass für jeden Sack pulverförmige Spachtelmasse, welcher mit Anmachwasser zu einem gebrauchsfertigen Bodenspachtel angemischt werden muss, erneut ein Abwiegen und Zumischen der dekorativen Zusätze wie Farbtonkonzentrat oder Metallchips erfolgen muss. Dies führt in vielen Fällen dazu, dass zwischen den getrennt angemischten Chargen von Bodenspachteln Farbunterschiede bestehen. Ferner können beim Zumischen von kreativen Zusätzen wie Metallchips zwischen den einzelnen Chargen Unterschiede in der Konzentration und Verteilung der stückigen Zusätze entstehen.

Bei großflächigen Bodenbelägen, zu deren Herstellung mehrere Chargen an Bodenspachtel nötig sind, birgt die gängige Praxis die Gefahr, dass durch die Unterschiede in den getrennt angemischten Chargen ein inhomogener Gesamteindruck des ausgehärteten Bodenbelags entsteht.

Ein weiterer Nachteil besteht in dem Zeitaufwand, welcher das Abwiegen und Zumischen der kreativen Zusätze wie Farbtonkonzentrat oder Metallchips mit sich bringt, sowie dem Erfordernis eine Feinwaage auf der Baustelle bereitstellen zu müssen.

Aus der WO 2006/125501 A2 ist eine Beschichtungszusammensetzung in Form eines 2-Komponenten-Kits bekannt, welche eine erste und eine zweite Komponente enthält, wobei die erste Komponente Gips und/oder Zement enthält, der in einem mit Wasser mischbaren organischen Lösemittel dispergiert ist, und die zweite Komponente ein wasserlösliches Polymer enthält, und wobei die erste und zweite Komponente miteinander mischbar sind, wodurch eine gehärtete Beschichtungszusammensetzung gebildet wird.

Ausgehend von dem voranstehend erläuterten Stand der Technik bestand die Aufgabe der vorliegenden Erfindung nunmehr darin, ein Kit-of-parts zur Herstellung eines gebrauchsfertigen Bodenspachtels, eine Verwendung dieses Kit-of-parts, eine pastöse Bodenspachtelmasse sowie ein Verfahren zur Herstellung eines gebrauchsfertigen Bodenspachtels bereitzustellen, welche die zuvor genannten Nachteile und Probleme des Standes der Technik weitgehend vermeiden oder zumindest verringern.

Die Aufgabe ist erfindungsgemäß durch die in Anspruch 1 angegebene pastöse Bodenspachtelmasse, das in Anspruch 11 angegebene Kit-of-parts, dessen in Anspruch 16 angegebene Verwendung, und das Verfahren gemäß Anspruch 17 gelöst worden.

Vorteilhafte Ausgestaltungen der Erfindung sind in den abhängigen Ansprüchen angegeben und werden nachfolgend wie der allgemeine Erfindungsgedanke im Einzelnen erläutert.

Die erfindungsgemäße pastöse Bodenspachtelmasse enthält
- 20 bis 30 Gew.% Wasser,
- 20 bis 40 Gew.% Calciumcarbonat,
- 20 bis 40 Gew.% Mineralischer Füllstoff,
- 10 bis 20 Gew.% Calciumsulfat,
   und zusätzlich 1 bis 5 Gew.% Polymer.

Das erfindungsgemäße Kit-of-parts zur Herstellung eines gebrauchsfertigen Bodenspachtels umfasst die erfindungsgemäße pastöse Bodenspachtelmasse und eine Härtekomponente. Wenn hier von Kit-of-parts die Rede ist, dann ist damit ein Mehrkomponentensystem, ein Teilesatz und/oder ein Satz oder eine Gruppe aus Komponenten oder Einzelteilen gemeint. Erfindungsgemäß wird ein Kit-of-parts bereitgestellt, dessen Komponenten zur Herstellung eines gebrauchsfertigen Bodenspachtels nur noch miteinander vermengt werden müssen.

Dabei ist eine der Komponenten des Kit-of-parts die erfindunsgemäße pastöse Bodenspachtelmasse. Unter pastös im Sinne dieser Erfindung ist insbesondere leicht fließfähig zu verstehen. Andere Bodenspachtelmassen, welche aus dem Stand der Technik bekannt sind, beginnen bei Kontakt mit Wasser bei der Herstellung einer pastösen Bodenspachtelmasse auszuhärten. Daher müssen die bisher bekannten Bodenspachtelmassen als Trockenmischung gelagert werden und dürfen erst kurz vor Gebrauch mit Wasser angemischt werden. Die erfindungsgemäße pastöse Bodenspachtelmasse, welche in dem erfindungsgemäßen Kit-of-parts enthalten ist, hat den Vorteil, dass sie pastös lagerfähig ist, ohne auszuhärten.

Das Aushärten des durch das erfindungsgemäße Kit-of-parts erhältlichen Bodenspachtels erfolgt erst durch die Härtekomponente, welche als weiterer Bestandteil im erfindungsgemäßen Kit-of-parts enthalten ist. Unter Härtekomponente im Sinne dieser Erfindung wird jeder Stoff oder jede Stoffmischung verstanden, welche bei Vermischung mit der ebenfalls im erfindungsgemäßen Kit-of-parts enthaltenen erfindunsgemäßen pastösen Bodenspachtelmasse zur Aushärtung des so erhältlichen Bodenspachtels führt.

Das erfindungsgemäße Kit-of-parts dient zur Herstellung eines gebrauchsfertigen Bodenspachtels. Besonders geeignet ist das erfindungsgemäße Kit-of-parts zur Herstellung eines Bodenspachtels auf Basis eines hydraulischen Bindemittels.

Wenn hier von Bindemittel die Rede ist, so sind damit alle Stoffe gemeint, durch die Feststoffe mit einem feinen Zerteilungsgrad, beispielsweise Pulver, miteinander bzw. auf einer Unterlage verklebt werden können. Unter hydraulischem Bindemittel versteht der Fachmann Bindemittel, welche sowohl an der Luft als auch unter Wasser härten. Hydraulische Bindemittel sind beispielsweise: Zement, Mischbinder, hydraulischer Kalk (Trass), Putz- und Mauerbinder auf ZementBasis. Optimale Ergebnisse lassen sich mit dem erfindungsgemäßen Kit-of-parts zur Herstellung eines Bodenspachtels auf Zementbasis erzielen. Zement hat dabei den Vorteil, dass der erfindungsgemäß erhaltene Bodenspachtel einen besonders hohen Härtegrad aufweist. Dadurch ist er als Bodenspachtel besonders gut geeignet, da Bodenspachtel im Gegensatz zu Wandspachteln höheren mechanischen Schlag- und Stoßbeanspruchungen ausgesetzt sind.

Eine bevorzugte Ausgestaltung des erfindungsgemäßen Kit-of-parts besteht darin, dass die Komponenten, insbesondere die erfindungsgemäße Bodenspachtelmasse und die Härtekomponente, so beschaffen sind, dass der durch das Kit-of-parts erhältliche Bodenspachtel vor dem Aushärten selbstverlaufend ist. Unter selbstverlaufendem Bodenspachtel im Sinne dieser Erfindung sind auch sogenannte Fließestriche, -mörtel, Ausgleichs- oder Nivelliermassen zu verstehen. Solche selbstverlaufenden Bodenspachtel haben den Vorteil, dass Sie fließ- und pumpfähig sind und damit Zeit bei der Aufbringung des Bodenspachtels gespart werden kann. Des Weiteren bewirken selbstverlaufende Bodenspachtel automatisch einen Höhenausgleich und führen damit nach Aushärtung zu besonders ebenen Oberflächen. Dies erlaubt ihren Einsatz zum Ausgleichen (Nivellieren) von unebenen Grundflächen beziehungsweise hat den Vorteil, dass der Untergrund vor Auftragung des Bodenspachtels nicht vorher begradigt werden muss.

Ein besonderer Vorteil des durch das erfindungsgemäße Kit-of-parts erhältlichen Bodenspachtels ist, dass er als Endbeschichtung verwendet werden kann, d.h. den obersten Bodenbelag in Wohn- und Außenräumen bilden kann.

Erfindungsgemäß lassen sich mit dem Kit-of-parts besonders harte Bodenbeläge herstellen. Praktische Versuche haben gezeigt, dass sich mit dem erfindungsgemäßen Kit-of-parts Bodenspachtel herstellen lassen, welche nach Aushärtung eine hohe mechanische Festigkeit aufweisen. Diese hohe mechanische Festigkeit führt zu einer besonders hohen Belastbarkeit des mit dem erfindungsgemäßen Kit-of-parts herstellbaren Bodenbelags, welcher sich insbesondere durch eine hohe Druck-, Biegezug-, und Haftzugfestigkeit auszeichnet. Gemäß einer besonderen Ausführungsform der Erfindung weisen die mit dem erfindungsgemäßen Kit-of-parts herstellbaren Bodenbeläge Druckfestigkeiten nach prEN 13892-2 von mindestens Klasse C7 oder C12, bevorzugt mindestens Klasse C16, jeweils gemessen nach 7 Tagen, auf. Weiter vorzugsweise weisen die mit dem erfindungsgemäßen Kit-of-Parts herstellbaren Bodenbeläge Druckfestigkeiten nach prEN 13892-2 gemessen nach 28 Tagen von mindestens Klasse C16 oder C20, bevorzugt mindestens Klasse C25 auf. Gemäß einer weiteren Ausführungsform der Erfindung weisen die mit dem erfindungsgemäßen Kit-of-parts herstellbaren Bodenbeläge Biegezugfestigkeiten nach prEN 13892-2 von mindestens Klasse F3 oder F4, bevorzugt mindestens Klasse F5, jeweils gemessen nach 7 Tagen, auf bzw. gemessen nach 28 Tagen von mindestens Klasse F5 oder F6, bevorzugt mindestens Klasse F7 auf. Gemäß einer weiteren Ausführungsform der Erfindung zeichnen sich die mit dem erfindungsgemäßen Kit-of-parts herstellbaren Bodenbeläge durch Haftzugfestigkeitswerte nach prEN 13892-8 von mindestens > 1,0 N/mm² bevorzugt, mindestens 1,5 N/mm² aus. Praktische Versuche haben gezeigt, dass mit dem erfindungsgemäßen Kit-of-parts Bodenbeläge herstellbar sind, die nach DIN EN 13813 in die Verschleißwiderstandsklasse gegen Rollbeanspruchung RWA10 einzuordnen sind.

Um die Herstellung von hellem Bodenspachtel mit dem erfindungsgemäßen Kit-of-parts zu ermöglichen, hat es sich in der Praxis als vorteilhaft erwiesen, wenn sowohl die erfindunsgemäße pastöse Bodenspachtelmasse als auch die Härtekomponente einen Hellbezugswert Y von mindestens 50, besonders bevorzugt von 65 bis 90, aufweisen. Die üblicherweise eingesetzten zementären Bodenspachtel weisen auf Grund des hohen Eisenoxidanteils in den hydraulischen Bindemitteln eine meist dunkle Eigenfarbe mit einem Hellbezugswert Y von 30 und weniger auf. Im Gegensatz hierzu lassen sich die erfindungsgemäß erhältlichen Bodenspachtel mit einem Hellbezugswert Y von mindestens 50 auch als helle Oberflächenbeschichtung flächig einsetzen und sind durch Farbmittel beliebig einfärbbar. Optimalerweise sollten die erfindungsgemäße pastöse Bodenspachtelmasse, die Härtekomponente und/oder der durch das erfindungsgemäße Kit-of-parts herstellbare Bodenspachtel einen Hellbezugswert Y von mindestens 50, bevorzugt von zwischen 65 und 90, aufweisen.

Der Hellbezugswert Y ist ein objektiver Helligkeitsparameter, der nach dem Commision International de l'Eclairage (CIE)-Normvalenzsystem und der grundlegenden Norm DIN 5033 mit einem Farbmessgerät bestimmt werden kann. Dabei bedeutet theoretisch ein Hellbezugswert Y von 0, Schwarz; und ein Hellbezugswert Y von 100, Weiß.

Nach einer bevorzugten Ausführungsform der Erfindung, kann die in dem erfindunsgemäßen Kit-of-parts enthaltene erfindunsgemäße pastöse Bodenspachtelmasse bereits eingefärbt vorliegen. Hierzu wird eine in Bezug auf die angestrebte Einfärbung ausreichende Menge an Farbmittel ausgewählt aus der Gruppe bestehend aus organischen und/oder anorganischen Pigmente und/oder Pigmentpäparationen zugesetzt. Für die Herstellung eines zementbasierten Bodenspachtels werden hierzu zementechte Farbmittel oder Pigmente bzw. Pigmentpräparationen eingesetzt. Im Sinne dieser Erfindung gelten Farbmittel oder Pigmente dann als zementecht, wenn sie gegenüber Basen widerstandsfähig sind. Beispiele für zementechte Farbmittel oder Pigmente sind: Eisenoxidschwarz, Manganschwarz, Eisenoxidrot, Eisenoxidgelb, Eisenoxidbraun, Umbra, Ocker, Terra die Siena, Neapelgelb, Chromoxidgrün, Chromoxidhydratgrün, Titanweiß R, Anatas, Ultramarinblau und Manganblau. Selbstverständlich sind auch jedwede anderweitigen zementechten Farbmittel denkbar.

Gute Ergebnisse können beispielsweise erzielt werden, wenn die pigmentierte Bodenspachtelmasse als Hilfsstoff 0,1 bis 10 Gew.% vorzugsweise 0,5 bis 2 Gew.% wenigstens eines zementechten Farbmittels enthält.

In den letzten Jahren ist die Nachfrage nach kreativen, dekorativen, außergewöhnlichen und/oder individuell gestalteten Bodenbelägen stark gestiegen. Der mit dem erfindungsgemäßen Kit-of-parts herstellbare Bodenspachtel genügt allen Anforderungen an solch einen kreativ gestaltbaren Bodenbelag. So erlaubt die helle Farbe der Einzelkomponenten des erfindungsgemäßen Kit-of-parts das beliebige Einfärben mit Farbmitteln. Bis auf das Erfordernis, dass im Falle eines zementbasierten Bodenspachtels das Farbmittel zementecht sein sollte, sind der Kreativität bei der Auswahl des Farbmittels keine Grenzen gesetzt. Insbesondere sind im Sinne dieser Erfindung unter Farbmittel auch lichtreflektierende, leuchtende, glänzende, metallische, glitzernde, fluoreszierende und/oder selbstleuchtende Farbmittel zu verstehen.

Im Gegensatz zum Stand der Technik, bei dem für jede Charge Bodenspachtel, welche auf der Baustelle vor Gebrauch frisch mit Wasser angemischt werden muss, Farbtonkonzentrat abgewogen und zugemischt werden muss, hat die in dem erfindungsgemäßen Kit-of-parts enthaltene erfindungsgemäße pastöse Bodenspachtelmasse den Vorteil, dass Sie unabhängig vom Verwendungszeitpunkt im Vorhinein eingefärbt werden kann. Da die erfindungsgemäße pastöse Bodenspachtelmasse vorzugsweise dadurch gekennzeichnet ist, dass sie lagerfähig ist ohne Auszuhärten, kann sie schon lange Zeit vor ihrer Benutzung zur Herstellung eines gebrauchsfertigen Bodenspachtels eingefärbt, abgepackt und gelagert werden. Insbesondere kann das Einfärben in industriellem Maßstab bei der Herstellung der pastösen Spachtelmasse für das erfindungsgemäße Kit-of-parts erfolgen. Dabei können hochexakte Farbdosiersysteme und Feinwaagen zum Einsatz kommen, welche üblicherweise auf Baustellen nicht vorhanden sind. Mit anderen Worten lassen sich mit dem erfindungsgemäßen Kit-of-parts kreative farbige Bodenspachtel herstellen, deren Farbton nicht mehr von dem Arbeiter auf der Baustelle für jede Charge einzeln eingestellt werden muss, sondern wesentlich exakter und reproduzierbar im Vorhinein eingestellt werden kann.

Nach einer weiteren bevorzugten Ausführungsform kann die in dem Kit-of-parts enthaltene erfindunsgemäße pastöse Bodenspachtelmasse nicht nur Farbmittel, sondern auch sonstige dekorative Zusätze enthalten. Diese können stückig aber auch faserartig sein. Optimale Ergebnisse lassen sich erzielen, wenn die in dem erfindungsgemäßen Kit-of-parts enthaltene Bodenspachtelmasse als Hilfsstoff 0,1 bis 10 Gew.% vorzugsweise 0,5 bis 2 Gew.% organische und anorganische, gegebenenfalls angefärbte verrottungsstabile Chips, Sande oder Faserstoffe enthält.

Die erfindungsgemäße pastöse Bodenspachtelmasse enthält
20 bis 30 Gew.% Wasser,
20 bis 40 Gew.% Calciumcarbonat,
20 bis 40 Gew.% Mineralischer Füllstoff,
10 bis 20 Gew.% Calciumsulfat,
   und zusätzlich 1 bis 5 Gew.% Polymer.

Unter mineralischem Füllstoff im Sinne dieser Erfindung ist jede Art kleingemahlenes mineralisches Material, vorzugsweise in einer Körnung von 0,0001 bis 1,3 mm gemeint. Besonders bevorzugt sind Quarz-, Granit- oder Marmorsande bzw. -mehle oder gewaschene Sande, ganz bevorzugt heller Quarzsand in einer Körnung bis 1,2 mm. Als mineralischer Füllstoff kann auch eine Mischung der zuvor genannten Füllstoffe, gegebenenfalls in Mischung mit feinkörnigen Erdalkalicarbonaten, bevorzugt Calciumcarbonat mit einer Körnung von kleiner als 100 µm verwendet werden.

Die erfindunsgemäße pastöse Bodenspachtelmasse enthält zusätzlich 1 bis 5 Gew.% Polymer. Dieses kann fest oder flüssig sein, wobei letzteres bevorzugt ist. Gemäß einer bevorzugten Ausführungsform wird das Polymer als Flüssigdispersion eingesetzt. Optimale Ergebnisse stellen sich ein, wenn das Polymer ausgewählt ist aus der Gruppe bestehend aus Styrolacetat, Vinylacetat, Vinylchlorid und Styrolbutadien. Des Weiteren ist es vorteilhaft, wenn die erfindungsgemäße pastöse Bodenspachtelmasse zusätzlich Additive ausgewählt aus der Gruppe bestehend aus Netz- und Dispergiermittel, Entschäumer, Entlüfter, Verdicker und Verarbeitungshilfsmittel, Zementverzögerer, Zementbeschleuniger, Zementverflüssiger und Bindemittel oder Mischungen hiervon enthält. Die Zusammensetzung und Mengen der Additive sind erfindungsgemäß so einzustellen, dass die pastöse Spachtelmasse homogen und fein dispergiert lagerfähig ist ohne dabei auszuhärten. Des Weiteren sind die Zusammensetzung und Mengen der Additive erfindungsgemäß so einzustellen, dass die rheologischen Eigenschaften optimal sind, der erfindungsgemäß hergestellte Bodenspachtel vor dem Aushärten fließ- und pumpfähig ist und eine Schaumbildung unterdrückt wird.

Besonders gute Ergebnisse können beispielsweise erzielt werden, wenn die erfindungsgemäße pastöse Bodenspachtelmasse die zuvor genannten Additive vorzugsweise in einer Menge von 0,5 bis 5 Gew.% enthält.

In einer besonders bevorzugten Ausführungsform enthält die erfindunsgemäße pastöse Bodenspachtelmasse dabei den Zementverzögerer in einer Konzentration von 0,01 bis 0,5 Gew.%, den Zementbeschleuniger in einer Konzentration von 0,01 bis 0,5 Gew.% und/oder den Zementverflüssiger in einer Konzentration von 0,1 bis 0,5 Gew.%. Es stellen sich optimale Ergebnisse ein, wenn der Zementverzögerer ausgewählt ist aus der Gruppe bestehend aus Zitronensäure, Weinsäure, Apfelsäure, Citrate, Phosphate, Phosphonate, Phosphorsäuren, Gluconsäuren, Glucono-delta-Lacton, Gluconate, Tartrate und Zinkverbindungen oder Mischungen hiervon; der Zementbeschleuniger ausgewählt ist aus der Gruppe bestehend aus Calciumformiaten, Thiocyanaten, Lithiumsalzen, Lithiumcarbonaten, Aluminiumverbindungen, Formiaten und Wasserglas oder Mischungen hiervon; und/oder der Zementverflüssiger ausgewählt ist aus der Gruppe bestehend aus Polycarboxylate, Sulfonate, Polyacrylate, Melaminharzderivate, Ligninsulfonat und Polynaphthalinsulfonsäure oder Mischungen hiervon. Es sind selbstverständlich auch andere im Handel erhältlichen Zementverzögerer, -beschleuniger und -verflüssiger im Wege dieser Erfindung einsetzbar.

Es hat sich als vorteilhaft herausgestellt, wenn die erfindungsgemäße pastöse Bodenspachtelmasse zusätzlich Entschäumer bzw. Entlüfter, vorzugsweise auf Basis von Mineralölen und/oder Siliconölen enthält. Auch die Zugabe von Verdickern und/oder Verarbeitungshilfsmittel ausgewählt aus der Gruppe bestehend aus Celluloseethern, Polysacchariden, Schichtsilikaten, Acrylaten und/oder Polyurethane oder Mischungen hiervon, hat sich als vorteilhaft erwiesen. Ferner kann die pastöse Bodenspachtelmasse gemäß einer weiteren Ausführungsform zusätzlich weitere Additive ausgewählt aus der Gruppe bestehend aus Offenhaltemittel, Fettalkoholen, Topf- und/oder Filmkonservierer und Koaleszenzmittel oder Mischungen hiervon enthalten.

In einer besonders bevorzugten Ausführungsform enthält die erfindungsgemäße pastöse Bodenspachtelmasse zusätzlich Netz- und Dispergiermittel, wobei diese ausgewählt sein können aus der Gruppe bestehend aus anionischen, kationischen und nichtionischen Tensiden oder Mischungen hiervon.

Des Weiteren kann die erfindunsgemäße pastöse Bodenspachtelmasse zusätzlich Bindemittel enthalten, wobei diese ausgewählt sind aus der Gruppe bestehend aus Kunstharz-Dispersionsbindemittel, vorzugsweise auf Basis von Acrylat, Vinylacetat, Styrol, Butadien, Phenylacetaten, Alkydharzemulsionen und/oder wässrigen Bindemittelhybriden oder Mischungen hiervon.

Gemäß einer weiteren Ausführungsform enthält die erfindungsgemäße pastöse Bodenspachtelmasse zusätzlich Füllstoffe. Diese sind bevorzugt ausgewählt aus der Gruppe bestehend aus Carbonate, Sulfate, Silikate, Talkum und Diatomeenerden oder Mischungen hiervon.

Als Lösungsmittel für die erfindungsgemäße pastöse Bodenspachtelmasse kommen Wasser und/oder aliphatische und/oder aromatische Kohlenwasserstoffe, sowie Mischungen, die diese Stoffe enthalten, in Frage.

Praktische Versuche haben gezeigt, dass es vorteilhaft ist, wenn die erfindungsgemäße pastöse Bodenspachtelmasse bevorzugt als Hilfsstoff 0,01 bis 5,0 Gew.%, vorzugsweise 0,05 bis 2 Gew.% und insbesondere bevorzugt etwa 0,1 Gew.% Schwindreduktionsmittel enthält. Es hat sich gezeigt, dass diese Einsatzmengen an Schwindreduktionsmitteln wirksam die Bildung von Rissen beim Trocknungsprozess des aushärtenden Bodenspachtels unterdrücken bzw. reduzieren. Als Schwindreduktionsmittel kann im Sinne dieser Erfindung beispielsweise ein Gemisch von Polyglykolethern verwendet werden.

Ein erheblicher Vorteil des erfindungsgemäßen Kit-of-parts besteht darin, dass die Bodenspachtelmasse, welche den Großteil der Bodenspachtelzutaten enthält, schon vorgemischt und pastös vorliegt. Dies wird dadurch ermöglicht, dass die erfindungsgemäße pastöse Bodenspachtelmasse lagerfähig ist ohne auszuhärten. Um den gebrauchsfertigen Bodenspachtel, welcher zur Bildung des Bodenbelags aushärten soll, vor Gebrauch herstellen zu können, enthält das erfindungsgemäße Kit-of-parts eine Härtekomponente.

Das Gewichtsverhältnis der in dem erfindungsgemäßen Kit-of-parts enthaltenen Komponenten pastöse Bodenspachtelmasse und Härtekomponente kann für die jeweilige Verwendung des mit dem erfindungsgemäßen Kit-of-parts herstellbaren Bodenspachtels in einer Versuchsreihe ermittelt werden. Hierbei spielen sowohl die angestrebte Belastbarkeit und Oberflächeneigenschaften des ausgehärteten Bodenspachtels eine Rolle, als auch die rheologischen Eigenschaften, wie beispielsweise die Fließ- und Pumpfähigkeit des frisch hergestellten pastösen Bodenspachtels. Ein weiterer wichtiger Faktor, den es zu berücksichtigen gilt, ist die Kinetik und die Dauer des Aushärtvorgangs, nachdem der mit dem erfindungsgemäßen Kit-of-parts hergestellte Bodenspachtel auf einen Untergrund ausgebracht wurde.

Praktische Versuche haben gezeigt, dass der mit dem erfindungsgemäßen Kit-of-parts hergestellte Bodenspachtel optimale Eigenschaften aufweist, wenn die Härtekomponente in einer Menge von 15 bis 30 Gew.%, weiter bevorzugt in einer Menge von 20 bis 25 Gew.%, bezogen auf das Gesamtgewicht von Bodenspachtelmasse und Härtekomponente vorliegt. So zeichnet er sich durch eine überraschend hohe Druckfestigkeit, eine ausgezeichnete Biegezug- und Haftzugfestigkeit und/oder optimale Fließ- und Pumpfähigkeit und rheologische Eigenschaften aus.

In einer bevorzugten Ausführungsform liegt die Härtekomponente in dem erfindungsgemäßen Kit-of-parts pulverförmig vor.

In Versuchen wurde festgestellt, dass es überraschenderweise bei Verwendung des erfindungsgemäßen Kit-of-parts zur Herstellung einer gebrauchsfertigen Spachtelmasse nicht zu einer beträchtlichen Staubentwicklung kommt. Dies erklärt sich wahrscheinlich dadurch, dass der mengenmäßige Großteil des Kit-of-parts in Form der erfindungsgemäßen pastösen Bodenspachtelmasse schon pastös vorliegt, und dieser nur ein mengenmäßig kleinerer Teil einer pulverförmigen Härtekomponente, bevorzugt in einer Menge von 15 bis 30 Gew.%, weiter bevorzugt in einer Menge von 20 bis 25 Gew.%, bezogen auf das Gesamtgewicht von erfindungsgemäßer pastöser Bodenspachtelmasse und Härtekomponente, zugemischt wird.

Im Gegensatz dazu geht die Herstellung der aus dem Stand der Technik bekannten Bodenspachtel mit einer erheblichen Staubentwicklung einher, da eine große Menge pulverförmige Bodenspachtelmassentrockenmischung mit Wasser vermischt und angerührt werden muss. Die weitgehende Verringerung des Staubaufkommens, welche durch die erfindungsgemäße Zusammensetzung des Kit-of-parts ermöglicht wird, hat den Vorteil, dass eine großflächige Verschmutzung, welche mit Zeitaufwand wieder bereinigt werden müsste, verhindert wird und zum anderen auch das Gesundheitsrisiko der Beschäftigten minimiert wird.

In einer bevorzugten Ausführungsform enthält die Härtekomponente ein hydraulisches Bindemittel. Dieses hydraulische Bindemittel, welches obenstehend definiert wurde, und/oder die Härtekomponente kann insbesondere auch Zement, Kalk und/oder Gips enthalten.

Gemäß einer bevorzugten Ausführungsform ist der Zement ausgewählt aus der Gruppe bestehend aus Portlandzementen, Portlandkompositzementen, Hochofenzementen, Puzzolanzementen, Kompositzementen, Weisszementen, Calciumaluminat-Zementen und Calciumsulfoaluminat-Zementen, Tonerdeschmelzzementen, Trasszementen und Schnellzementen oder Mischungen hiervon.

Damit der mit dem erfindungsgemäßen Kit-of-parts herstellbare Bodenspachtel allen Ansprüchen an einen kreativ gestaltbaren und insbesondere einfärbbaren Bodenspachtel, wie obenstehend beschrieben, genügt, ist es besonders vorteilhaft, wenn es sich bei dem hydraulischen Bindemittel oder dem Zement um einen Spezialzement mit einem Hellbezugswert Y von mindestens 50, besonders bevorzugt zwischen 65 und 95 handelt. Praktische Versuche haben ergeben, dass Spezialzemente ausgewählt aus der Gruppe der Tonerdeschmelzzemente besonders vorteilhaft sind.

Nach einer weiteren Ausführungsform betrifft die vorliegende Erfindung die Verwendung des voranstehend beschriebenen Kit-of-parts zur Herstellung eines gebrauchsfertigen Bodenspachtels. Dabei werden die einzelnen Komponenten des Kit-of-parts miteinander durchmischt, sodass eine möglichst homogene Verteilung der Härtekomponente in der pastösen Bodenspachtelmasse gewährleistet ist. Anschließend wird der so hergestellte Bodenspachtel entsprechend der bezweckten Verwendung aufgebracht. Überraschenderweise hat sich gezeigt, dass bei Aufbringen auf einen Untergrund in einer Schichtdicke von 2 bis 10 mm der erfindungsgemäß hergestellte Bodenspachtel besonders schnell, im Mittel innerhalb von 2 bis 3 Stunden, aushärtet und schon nach etwa 6 Stunden begehbar ist.

Bei Verwendung des erfindungsgemäßen Kit-of-parts zur Herstellung eines gebrauchsfertigen Bodenspachtels können beim Vermischen der Komponenten des Kit-of-parts noch weitere Farbmittel oder dekorative Zusätze beigemischt werden. Dies ist insbesondere dann erwünscht, wenn die Bodenspachtelmasse zur Herstellung von Bodenflächen mit besonderen Bemusterungen, Farbschattierungen, Farbschlieren, optischen Effekten und/oder Leuchteffekten dienen soll.

Die Verwendung des erfindungsgemäßen Kit-of-parts eignet sich insbesondere zur Herstellung von Bodenspachteln für Innenanwendungen. Unter Innenanwendungen werden im Sinne dieser Erfindung alle Arbeiten im überdachten Bereich und insbesondere die Herstellung speziell ausgestalteter Bodenbeläge verstanden.

Es ist hervorzuheben, dass sich der mit dem erfindungsgemäßen Kit-of-parts herstellbare Bodenspachtel zum Auftragen auf eine große Zahl unterschiedlicher Untergründe eignet. So lässt sich der erfindungsgemäß herstellbare Bodenspachtel auf Untergründen auf der Basis von Beton oder Zement- oder Calciumsulfat-Estrich, aber auch auf Holzspanplatten oder Holz-Zement-Platten aufbringen. Besonders bevorzugte Untergründe sind dabei Beton (min. C20/25 nach DIN EN 206), Zementestrich (min. CT-C25/F4 nach DIN EN 13813) und Calciumsulfatestrich (min. CA-C35-F6 nach DIN EN 13813). Schon bei geringer Auftragsmenge bildet sich mit dem erfindungsgemäß herstellbaren Bodenspachtel, welcher bevorzugt selbstverlaufend ist, eine dünne Bodenspachtelschicht, die eine hervorragend glatte, geschlossene und/oder porenfreie Oberfläche besitzt. Die Bodenspachtelschicht zeichnet sich ferner durch eine überraschend hohe Druckfestigkeit sowie eine ausgezeichnete Biegezug- und Haftzugfestigkeit aus.

Das besondere an der erfindungsgemäßen pastösen Bodenspachtelmasse ist, dass sie schon pastös vorliegt und lagerfähig ist, ohne bei der Lagerung auszuhärten. Ihr muss zum Erhalt eines gebrauchsfertigen Bodenspachtels, welcher aushärten muss, um einen begehbaren Bodenbelag bilden zu können, eine Härtekomponente zugemischt werden.

Zum Erhalt eines gebrauchsfertigen Bodenspachtels kann die Härtekomponente der erfindungsgemäßen pastösen Bodenspachtelmasse in einer Menge von 15 bis 30 Gew.%, weiter bevorzugt in einer Menge von 20 bis 25 Gew.%, bezogen auf das Gesamtgewicht von Bodenspachtelmasse und Härtekomponente, zugemischt werden.

Nach einer weiteren Ausführungsform betrifft die vorliegende Erfindung ein Verfahren zur Herstellung eines gebrauchsfertigen Bodenspachtels unter Verwendung des erfindungsgemäßen Kit-of-parts. Dieses Verfahren beinhaltet den Schritt, dass der erfindungsgemäßen und obenstehend beschriebenen pastösen Bodenspachtelmasse eine Härtekomponente zugemischt wird.

Mit der Erfindung ist es somit wesentlich schneller, kostengünstiger und einfacher möglich, einen hochwertigen und kreativ gestaltbaren Bodenspachtel zu erhalten. Insbesondere erlaubt die Lagerfähigkeit der erfindungsgemäßen pastösen Bodenspachtelmasse, dass kreative Modifizierungen, wie Einfärbung oder Beimengen von dekorativen stückigen Zusätzen, nicht auf der Baustelle unmittelbar vor Herstellung des gebrauchsfertigen Bodenspachtels erfolgen müssen, sondern in einem zeitlich unabhängigen vorgelagerten Schritt mit höherer Genauigkeit und Reproduzierbarkeit sowie ohne Zeitdruck erfolgen können. Schließlich stellt das erfindungsgemäße Kit-of-parts eine erhebliche Zeitersparnis für den Arbeiter auf der Baustelle dar und es muss kein Wasser auf der Baustelle zur Verfügung gestellt werden, was die anfallenden Kosten wiederum minimiert. Überraschenderweise geht die Verwendung des erfindungsgemäßen Kit-of-parts und der erfindungsgemäßen pastösen Bodenspachtelmasse auch mit weniger Verschmutzung und Staubentwicklung einher, was ein geringeres Gesundheitsrisiko für die Beschäftigten zur Folge hat.

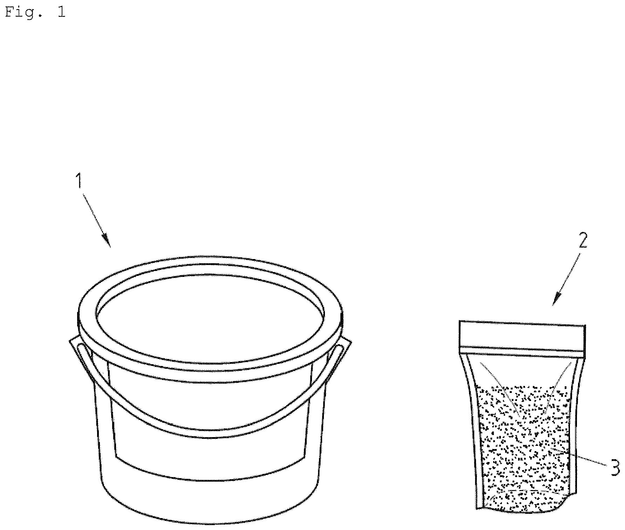

Nachfolgend wird die Erfindung anhand von Figur 1 und Ausführungsbeispielen näher erläutert. Es zeigt:
Figur 1 eine schematische Darstellung des erfindungsgemäßen Kit-of-parts umfassend ein Gebinde 1, welches die erfindungsgemäße pastöse Bodenspachtelmasse enthält und ein Behältnis 2, welches die Härtekomponente 3 in Pulverform enthält.

### Beispiel 1

In einem Laborversuch ist ein erfindungsgemäßes Kit-of-parts hergestellt worden. Dabei wies die pastöse Bodenspachtelmasse folgende Zusammensetzung auf:

| | |
|---|---|
| 22,9 % | Wasser |
| 30, 0 % | Calciumcarbonate (verschiedene Korngrößen) |
| 30, 0 % | Quarz (verschiedene Korngrößen) |
| 12,0 % | Calciumsulfat- 2-Hydrat |
| 3,0 % | Polymerdispersion, fest enthaltend Styrolacrylate, Vinylatcetate, Vinylchloride und Styrol-Butadien |
| 1,5 % | Additive enthaltend Netzmittel, Entschäumer, und Verdicker |
| 0,1 % | Zement Verzögerer Zitronensäure, Weinsäure , Zinkverbindungen z.B.: Zinkoxid ) |
| 0,1 % | Zementbeschleuniger (Lithiumcarbonat, Wasserglas) ) |
| 0,3 % | Zementverflüssiger (Polycarboxylate; Melaminharzderivate; Ligninsulfonat; Polynaphthalinsulfonsäure) |
| 0,1 % | Schwindreduktionsmittel (Polyglykolether-Gemisch) |

Die Bestandteile der Bodenspachtelmasse wurden vermischt und solange vermengt, bis eine möglichst homogene feindispergierte Mischung vorlag. Die so hergestellte Bodenspachtelmasse wies einen Hellbezugswert Y von etwa 80 auf.

Die Härtekomponente **3** bestand aus Tonerdschmelzzement.

Für das Kit-of-parts wurden 20 kg der pastösen Bodenspachtelmasse in ein Gebinde **1** abgefüllt, sowie in ein separates Behältnis **2** 5 kg der pulverförmigen Härtekomponente **3** abgewogen. Beide Behältnisse wurden luftdicht verschlossen.

Auch nach einer Lagerzeit von mehreren Monaten wies die pastöse Bodenspachtelmasse keine messbare Verschlechterung ihrer rheologischen Eigenschaften oder ihrer Homogenität auf. Insbesondere konnten keine Aushärtungserscheinungen, wie beispielsweise Verklumpungen, beobachtet werden.

### Beispiel 2

Ein Kit-of-parts wurde wie in Beispiel 1 beschrieben hergestellt. Jedoch wurde die Bodenspachtelmasse vor Abfüllen in das Gebinde **1** in einem separaten Schritt durch Zugabe von Farbmittel auf den genauen Farbton 7868 eingestellt. Hierzu wurde insgesamt 0,41 Gew.%, bezogen auf die Gesamtmasse der Spachtelmasse, an Farbpigment beigemischt.

Auch nach einer Lagerzeit von mehreren Monaten war der Farbton unverändert und insbesondere zwischen verschieden Chargen gleichbleibend und reproduzierbar.

### Beispiel 3

Die in Beispiel 1 und 2 bereitgestellten Kit-of-parts wurden zur Herstellung eines gebrauchsfertigen Bodenspachtels verwendet. Dazu wurde das die Härtekomponente **3** enthaltende 5 kg Behältnis **2** vollständig in das 20 kg Gebinde **1** entleert, welches die pastöse Bodenspachtelmasse enthielt. Nach zweiminütigem Verrühren mit einem Doppelrührwerk wurden die so hergestellten Bodenspachtel auf einer Fläche von jeweils 6 m² ausgebracht. Der Bodenspachtel war selbstverlaufend und bildete eine ebene glatte Oberfläche. Nach 3 Stunden war die Bodenspachtelschicht ausgehärtet und nach 6 Stunden begehbar.

Zwischen dem Bodenbelag, welcher mit dem Kit-of-parts gemäß Beispiel 1 hergestellt wurde, und dem Bodenbelag, welcher mit dem Kit-of-parts gemäß Beispiel 2 hergestellt wurde, ließen sich keine Unterschiede in Bezug auf die mechanischen Eigenschaften oder die Oberflächenbeschaffenheit feststellen. Beide Bodenbeläge wiesen eine hervorragend glatte, geschlossene und porenfreie Oberfläche auf.

Die mechanischen Parameter wurden wie folgt bestimmt:

| | |
|---|---|
| Druckfestigkeit nach pr EN 13892-2: | > C16 (nach 7 Tagen) |
| | > C25 (nach 28 Tagen) |
| Biegezugfestigkeit nach pr EN 13892-2: | > F5 (nach 7 Tagen) |
| | > F7 (nach 28 Tagen) |
| Haftzugfestigkeit nach pr EN 13892-8: | > 1,5 N/mm² (nach 28 Tagen) |
| Verschleißwiderstandsklasse gegen Rollbeanspruchung nach DIN EN 13813: | RWA 10 (nach 28 Tagen) |

## Patentansprüche

1. Pastöse Bodenspachtelmasse enthaltend
- 20 bis 30 Gew.% Wasser,
- 20 bis 40 Gew.% Calciumcarbonat,
- 20 bis 40 Gew.% Mineralischer Füllstoff,
- 10 bis 20 Gew.% Calciumsulfat,
und zusätzlich 1 bis 5 Gew.% Polymer.

2. Pastöse Bodenspachtelmasse nach Anspruch 1 **dadurch gekennzeichnet, dass** die pastöse Bodenspachtelmasse einen Hellbezugswert Y, gemessen nach DIN Norm 5033, Z von mindestens 50 aufweist
und/oder dass die pastöse Bodenspachtelmasse als Hilfsstoff 0,1 bis 10 Gew.%, insbesondere 0,5 bis 2 Gew.-%, wenigstens eines zementechten Farbmittels enthält.

3. Pastöse Bodenspachtelmasse nach einem der Ansprüche 1 oder 2 **dadurch gekennzeichnet, dass** das Polymer bzw. der Polymerbestandteil der Polymerdispersion ausgewählt ist aus der Gruppe bestehend aus Styrolacetat, Styrolacrylat, Vinylacetat, Vinylchlorid und Styrolbutadien.

4. Pastöse Bodenspachtelmasse nach einem der Ansprüche 1 oder 2 **dadurch gekennzeichnet, dass** die pastöse Bodenspachtelmasse zusätzlich 0,5 bis 5 Gew.% Additive ausgewählt aus der Gruppe bestehend aus Netz- und Dispergiermittel, Entschäumer, Entlüfter, Verdicker und Verarbeitungshilfsmittel, Zementverzögerer, Zementbeschleuniger und Zementverflüssiger oder Mischungen hiervon enthält.

5. Pastöse Bodenspachtelmasse nach Anspruch 4 **dadurch gekennzeichnet, dass** die pastöse Bodenspachtelmasse den Zementverzögerer in einer Konzentration von 0,01 bis 0,5 Gew.% enthält und/oder dass der Zementverzögerer ausgewählt ist aus der Gruppe bestehend aus Zitronensäure, Weinsäure, Apfelsäure, Citrate, Phosphate, Phosphonate, Phosphorsäuren, Gluconsäuren, Glucono-delta-Lacton, Gluconate, Tartrate und Zinkverbindungen oder Mischungen hiervon.

6. Pastöse Bodenspachtelmasse nach Anspruch 4 **dadurch gekennzeichnet, dass** die pastöse Bodenspachtelmasse den Zementbeschleuniger in einer Konzentration von 0,01 bis 0,5 Gew.% enthält und/oder dass der Zementbeschleuniger ausgewählt ist aus der Gruppe bestehend aus Calciumformiaten, Thiocyanaten, Lithiumsalzen, Lithiumcarbonaten, Aluminiumverbindungen, Formiaten und Wasserglas oder Mischungen hiervon.

7. Pastöse Bodenspachtelmasse nach Anspruch 4 **dadurch gekennzeichnet, dass** die pastöse Bodenspachtelmasse den Zementverflüssiger in einer Konzentration von 0,1 bis 0,5 Gew.% enthält und/oder dass der Zementverflüssiger ausgewählt ist aus der Gruppe bestehend aus Polycarboxylate, Sulfonate, Polyacrylate, Melaminharzderivate, Ligninsulfonat und Polynaphthalinsulfonsäure oder Mischungen hiervon.

8. Pastöse Bodenspachtelmasse nach Anspruch 4 **dadurch gekennzeichnet, dass** das Netz- und Dispergiermittel ausgewählt ist aus der Gruppe bestehend aus anionischen, kationischen und nichtionischen Tenside oder Mischungen hiervon; dass der Entschäumer bzw. Entlüfter auf Basis von Mineralölen und/oder Siliconölen ist; dass der Verdicker und/oder das Verarbeitungshilfsmittel ausgewählt ist aus der Gruppe bestehend aus Celluloseethern, Polysacchariden, Schichtsilikaten, Acrylaten und/oder Polyurethane oder Mischungen hiervon.

9. Pastöse Bodenspachtelmasse nach einem dem Ansprüche 1 oder 2 **dadurch gekennzeichnet, dass** die pastöse Bodenspachtelmasse zusätzlich
- Füllstoffe enthält, die ausgewählt sind aus der Gruppe bestehend aus Carbonate, Sulfate, Silikate, Talkum und Diatomeenerden oder Mischungen hiervon; und/oder
- Bindemittel enthält, die ausgewählt sind aus der Gruppe bestehend aus Kunstharz-Dispersionsbindemittel, insbesondere auf Basis von Acrylat, Vinylacetat, Styrol, Butadien, Phenylacetaten, Alkydharzemulsionen und/oder wässrigen Bindemittelhybriden oder Mischungen hiervon; und/oder
- weitere Additive enthält, die ausgewählt sind aus der Gruppe bestehend aus Offenhaltemittel, Fettalkoholen, Topf- und/oder Filmkonservierer und Koaleszenzmittel oder Mischungen hiervon.

10. Pastöse Bodenspachtelmasse nach einem der voranstehenden Ansprüche **dadurch gekennzeichnet, dass** die pastöse Bodenspachtelmasse lagerfähig ist, ohne auszuhärten.

11. Kit-of-parts zur Herstellung eines gebrauchsfertigen Bodenspachtels umfassend
- eine pastöse Bodenspachtelmasse nach einem der Ansprüche 1 bis 10 und
- eine Härtekomponente.

12. Kit-of-parts nach Anspruch 11 **dadurch gekennzeichnet, dass** die Härtekomponente einen Hellbezugswert Y von mindestens 50 aufweist.

13. Kit-of-parts nach einem der Ansprüche 11 bis 12 **dadurch gekennzeichnet, dass** die Härtekomponente in einer Menge von 15 bis 30 Gew.% bezogen auf das Gesamtgewicht von Bodenspachtelmasse und Härtekomponente vorliegt und/oder dass die Härtekomponente pulverförmig ist.

14. Kit-of-parts nach Anspruch 13 **dadurch gekennzeichnet, dass** die Härtekomponente ein hydraulisches Bindemittel enthält und/oder dass die Härtekomponente Kalk, Gips und/oder Zement enthält.

15. Kit-of-parts nach Anspruch 14 **dadurch gekennzeichnet, dass** der Zement ausgewählt ist aus der Gruppe bestehend aus Portlandzementen, Portlandkompositzementen, Hochofenzementen, Puzzolanzementen, Kompositzementen, Weisszementen, Calciumaluminat-Zementen und Calciumsulfoaluminat-Zementen, Tonerdeschmelzzementen, Trasszementen und Schnellzementen oder Mischungen hiervon und/oder dass der der Zement ein Spezialzement ist, der ausgewählt ist aus der Gruppe der Tonerdeschmelzzemente.

16. Verwendung eines Kit-of-parts nach einem der Ansprüche 11 bis 15 zur Herstellung eines gebrauchsfertigen Bodenspachtels, insbesondere eines Bodenspachtels für Innenanwendungen.

17. Verfahren zur Herstellung eines gebrauchsfertigen Bodenspachtels unter Verwendung eines Kit-of-parts nach einem der Ansprüche 11 bis 15 umfassend das Zumischen der Härtekomponente zu der pastösen Bodenspachtelmasse.

## Claims

1. Pasty floor filler compound containing
- 20 to 30 wt.% water,
- 20 to 40 wt.% calcium carbonate,
- 20 to 40 wt.% mineral filler,
- 10 to 20 wt.% calcium sulfate,
and additionally 1 to 5 wt.% polymer.

2. Pasty floor filler compound according to claim 1, **characterized in that** the pasty floor filler compound has a lightness reference value Y, measured according to DIN standard 5033, of at least 50 and/or **in that** the pasty floor filler compound contains 0.1 to 10 wt.%, in particular 0.5 to 2 wt.%, of at least one cement-compatible colorant as an auxiliary agent.

3. Pasty floor filler compound according to claim 1 or claim 2, **characterized in that** the polymer or the polymer component of the polymer dispersion is selected from the group consisting of styrene acetate, styrene acrylate, vinyl acetate, vinyl chloride, and styrene butadiene.

4. Pasty floor filler compound according to claim 1 or claim 2, **characterized in that** the pasty floor filler compound additionally contains 0.5 to 5 wt.% additives selected from the group consisting of wetting and dispersing agents, defoamers, deaerators, thickeners and processing aids, cement retardants, cement accelerators and cement liquefiers or mixtures thereof.

5. Pasty floor filler compound according to claim 4, **characterized in that** the pasty floor filler compound contains the cement retardant in a concentration of 0.01 to 0.5 wt.% and/or **in that** the cement retardant is selected from the group consisting of citric acid, tartaric acid, malic acid, citrates, phosphates, phosphonates, phosphoric acids, gluconic acids, glucono-delta-lactone, gluconates, tartrates and zinc compounds or mixtures thereof.

6. Pasty floor filler compound according to claim 4, **characterized in that** the pasty floor filler compound contains the cement accelerator in a concentration of 0.01 to 0.5 wt.% and/or in that the cement accelerator is selected from the group consisting of calcium formates, thiocyanates, lithium salts, lithium carbonates, aluminum compounds, formates and water glass or mixtures thereof.

7. Pasty floor filler compound according to claim 4, **characterized in that** the pasty floor filler compound contains the cement liquefier in a concentration of 0.1 to 0.5 wt.% and/or **in that** the cement liquefier is selected from the group consisting of polycarboxylates, sulfonates, polyacrylates, melamine resin derivatives, lignin sulfonate and polynaphthalene sulfonic acid or mixtures thereof.

8. Pasty floor filler compound according to claim 4, **characterized in that** the wetting and dispersing agent is selected from the group consisting of anionic, cationic and nonionic surfactants or mixtures thereof;
**in that** the defoamer or deaerator is based on mineral oils and/or silicone oils;
**in that** the thickener and/or the processing aid is selected from the group consisting of cellulose ethers, polysaccharides, sheet silicates, acrylates and/or polyurethanes or mixtures thereof.

9. Pasty floor filler compound according to either claim 1 or claim 2, **characterized in that** the pasty floor filler compound additionally contains
- fillers selected from the group consisting of carbonates, sulfates, silicates, talc and diatomaceous earths or mixtures thereof; and/or
- binders selected from the group consisting of synthetic resin dispersion binders, in particular based on acrylate, vinyl acetate, styrene, butadiene, phenyl acetates, alkyd resin emulsions and/or aqueous binder hybrids or mixtures thereof; and/or
- further additives selected from the group consisting of hold-open agents, fatty alcohols, in-can and/or film preservatives and coalescing agents or mixtures thereof.

10. Pasty floor filler compound according to any of the preceding claims, **characterized in that** the pasty floor filler compound can be stored without hardening.

11. Kit-of-parts for producing a ready-to-use floor filler, comprising
- a pasty floor filler compound according to any of claims 1 to 10 and
- a hardening component.

12. Kit-of-parts according to claim 11, **characterized in that** the hardening component has a lightness reference value Y of at least 50.

13. Kit-of-parts according to claim 11 or claim 12, **characterized in that** the hardening component is present in an amount of 15 to 30 wt.% based on the total weight of floor filler compound and hardening component and/or **in that** the hardening component is in powder form.

14. Kit-of-parts according to claim 13, **characterized in that** the hardening component contains a hydraulic binder and/or **in that** the hardening component contains lime, gypsum and/or cement.

15. Kit-of-parts according to claim 14, **characterized in that** the cement is selected from the group consisting of Portland cements, Portland composite cements, blast furnace cements, pozzolanic cements, composite cements, white cements, calcium aluminate cements and calcium sulfoaluminate cements, alumina cements, trass cements and quick cements or mixtures thereof and/or **in that** the cement is a special cement selected from the group of alumina cements.

16. Use of a kit-of-parts according to any of claims 11 to 15 for producing a ready-to-use floor filler, in particular a floor filler for interior applications.

17. Method for producing a ready-to-use floor filler using a kit-of-parts according to any of claims 11 to 15, comprising admixing the hardening component to the pasty floor filler compound.

## Revendications

1. Matière de remplissage de sol pâteuse, contenant
- 20 à 30 % en poids d'eau,
- 20 à 40 % en poids de carbonate de calcium,
- 20 à 40 % en poids de charge minérale,
- 10 à 20 % en poids de sulfate de calcium,
et en outre 1 à 5 % en poids de polymère.

2. Matière de remplissage de sol pâteuse selon la revendication 1, **caractérisée en ce que** la matière de remplissage de sol pâteuse présente une valeur de référence de la lumière Y, mesurée selon la norme DIN 5033, d'au moins 50 et/ou **en ce que** la matière de remplissage de sol pâteuse contient, en tant qu'adjuvant, 0,1 à 10 % en poids, en particulier 0,5 à 2 % en poids, d'au moins un colorant résistant au ciment.

3. Matière de remplissage de sol pâteuse selon l'une des revendications 1 ou 2, **caractérisée en ce que** le polymère ou le composant polymère de la dispersion polymère est choisi dans le groupe constitué par l'acétate de styrène, l'acrylate de styrène, l'acétate de vinyle, le chlorure de vinyle et le styrène butadiène.

4. Matière de remplissage de sol pâteuse selon l'une des revendications 1 ou 2, **caractérisée en ce que** la matière de remplissage de sol pâteuse contient en outre 0,5 à 5 % en poids d'additifs choisis dans le groupe constitué par les agents mouillants et dispersants, les agents anti-mousse, les désaérateurs, les épaississants et les adjuvants de traitement, les retardateurs de ciment, les accélérateurs de ciment et les fluidifiants de ciment ou leurs mélanges.

5. Matière de remplissage de sol pâteuse selon la revendication 4, **caractérisée en ce que** la matière de remplissage de sol pâteuse contient le retardateur de ciment à une concentration de 0,01 à 0,5 % en poids et/ou **en ce que** le retardateur de ciment est choisi dans le groupe constitué par l'acide citrique, l'acide tartrique, l'acide malique, les citrates, les phosphates, les phosphonates, les acides phosphoriques, les acides gluconiques, la glucono-delta-lactone, les gluconates, les tartrates et les composés de zinc ou leurs mélanges.

6. Matière de remplissage de sol pâteuse selon la revendication 4, **caractérisée en ce que** la matière de remplissage de sol pâteuse contient l'accélérateur de ciment à une concentration de 0,01 à 0,5 % en poids et/ou **en ce que** l'accélérateur de ciment est choisi dans le groupe constitué par les formiates de calcium, les thiocyanates, les sels de lithium, les carbonates de lithium, les composés d'aluminium, les formiates et le verre liquide ou leurs mélanges.

7. Matière de remplissage de sol pâteuse selon la revendication 4, **caractérisée en ce que** la matière de remplissage de sol pâteuse contient le fluidifiant de ciment à une concentration de 0,1 à 0,5 % en poids et/ou **en ce que** le fluidifiant de ciment est choisi dans le groupe constitué par les polycarboxylates, les sulfonates, les polyacrylates, les dérivés de résine de mélamine, le sulfonate de lignine et l'acide polynaphtalène sulfonique ou leurs mélanges.

8. Matière de remplissage de sol pâteuse selon la revendication 4, **caractérisée en ce que** l'agent mouillant et dispersant est choisi dans le groupe constitué par les tensioactifs anioniques, cationiques et non ioniques ou leurs mélanges ;
**en ce que** l'agent anti-mousse ou le désaérateur est à base d'huiles minérales et/ou d'huiles de silicone ;
**en ce que** l'épaississant et/ou l'adjuvant de traitement sont choisis dans le groupe constitué par les éthers de cellulose, les polysaccharides, les silicates lamellaires, les acrylates et/ou les polyuréthanes ou leurs mélanges.

9. Matière de remplissage de sol pâteuse selon l'une des revendications 1 ou 2, **caractérisée en ce que** la matière de remplissage de sol pâteuse contient en outre
- des charges choisies dans le groupe constitué par les carbonates, les sulfates, les silicates, le talc et les terres de diatomées ou leurs mélanges ; et/ou
- des liants choisis dans le groupe constitué par les liants de dispersion en résine synthétique, notamment à base d'acrylate, d'acétate de vinyle, de styrène, de butadiène, les acétates de phényle, les émulsions de résine alkyde et/ou les hybrides de liants aqueux ou leurs mélanges ; et/ou
- d'autres additifs choisis dans le groupe constitué par les agents de maintien d'ouverture, les alcools gras, les conservateurs de boîte et/ou de film et les agents coalescents ou leurs mélanges.

10. Matière de remplissage de sol pâteuse selon l'une des revendications précédentes, **caractérisée en ce que** la matière de remplissage de sol pâteuse peut être stockée sans durcir.

11. Kit de pièces pour la production d'un enduit de sol prêt à l'emploi comprenant
- une matière de remplissage de sol pâteuse selon l'une des revendications 1 à 10 et
- un composant durcisseur.

12. Kit de pièces selon la revendication 11, **caractérisé en ce que** le composant durcisseur présente une valeur de référence de la lumière Y d'au moins 50.

13. Kit de pièces selon l'une des revendications 11 et 12, **caractérisé en ce que** le composant durcisseur est présent en une quantité de 15 à 30 % en poids par rapport au poids total de la matière de remplissage de sol et du composant durcisseur et/ou **en ce que** le composant durcisseur se présente sous forme de poudre.

14. Kit de pièces selon la revendication 13, **caractérisé en ce que** le composant durcisseur contient un liant hydraulique et/ou **en ce que** le composant durcisseur contient de la chaux, du gypse et/ou du ciment.

15. Kit de pièces selon la revendication 14, **caractérisé en ce que** le ciment est choisi dans le groupe constitué par les ciments Portland, les ciments composites Portland, les ciments de haut fourneau, les ciments pouzzolane, les ciments composites, les ciments blancs, les ciments aluminates de calcium et les ciments sulfoaluminates de calcium, les ciments à forte teneur en alumine, les ciments trass et les ciments à prise rapide ou leurs mélanges et/ou **en ce que** le ciment est un ciment spécial choisi dans le groupe des ciments à forte teneur en alumine.

16. Utilisation d'un kit de pièces selon l'une des revendications 11 à 15 pour la production d'un enduit de sol prêt à l'emploi, en particulier d'un enduit de sol pour applications intérieures.

17. Procédé de production d'un enduit de sol prêt à l'emploi utilisant un kit de pièces selon l'une des revendications 11 à 15, comprenant le mélange du composant durcisseur et de la matière de remplissage de sol pâteuse.
